# EUROPEAN PATENT APPLICATION

(11) **EP 4 726 633 A1**
(43) Date of publication of application: **15.04.2026**
(21) Application number: 25201904.7
(22) Date of filing: 12.09.2025
(51) Int. Cl.: G06Q 30/0202, G06Q 30/0201, G06Q 30/0283

(54) **COMPETITIVE PRICING ENABLER AND METHOD ASSISTED BY GENERATIVE ARTIFICIAL INTELLIGENCE (GENAI) MODELS**

(30) Priority: 08.10.2024 IN 202421076106
(71) Applicant: Tata Consultancy Services Limited, Maharashtra (IN)
(72) Inventor: THIRUNAVUKKARASU, Jeisobers, 600098 Chennai, Tamil Nadu (IN); ELLAPPASAMY, Karthik, 600119 Chennai, Tamil Nadu (IN); ULAGANATHAN, Selva Ganapathy, 603103 Chennai, Tamil Nadu (IN); THANGAVEL, Vaira Muthu, 600017 Chennai, Tamil Nadu (IN); KUMAR, Hareesh, 600017 Chennai, Tamil Nadu (IN)
(74) Representative: Goddar, Heinz J.

(57) **Abstract**

Competitive pricing is the process of choosing strategic price points for items by retailers by considering their competition. It enables retailers to understand their current position in pricing as compared with their competitors and to optimize their pricing strategies accordingly. Existing technologies associated with competitive pricing do not consider the underlying mechanism of competitor price changes and examine competitor price changes in one dimension. Embodiments of the present disclosure provide a system and a method for pre-empting various dimensions of price variations for competitor items by capturing mechanism of competitive pricing in multiple dimensions by using multimodal GenAl foundation models and to enable integration of a plurality of applications associated with competitive pricing.

## Description

### CROSS-REFERENCE TO RELATED APPLICATIONS AND PRIORITY

The present application claims priority to Indian application no. 202421076106 filed on October 8, 2024.

### TECHNICAL FIELD

The disclosure herein generally relates to competitive pricing in retail, and, more particularly, to competitive pricing enabler and method assisted by generative artificial intelligence (GenAI) models.

### BACKGROUND

In retail, understanding of industry trends with respect to pricing of items is critical as it enables understanding of pricing strategies of major competitors and identifying the potential areas that need to be fine-tuned by retailers.

In retail merchandising, changing an item's price depends on many factors such as nature of item, time of price change, location, logistic, environmental factors and the like. Competitive pricing is the process of choosing strategic price points for items by retailers by considering their competition. It enables retailers to understand their current position in pricing as compared with their competitors and to optimize their pricing strategies accordingly. Retailers need a mechanism considering holistic view of price change which is influenced by multi-dimensional nature of factors and to recommend the items that are eligible for price change and also to decide multi dimension of price change. Existing technologies associated with competitive pricing did not consider the underlying mechanism of competitor price changes. Existing technologies focus price change in a single dimensional criterion and do not consider 'price change of an item' in a multidimensional direction.

### SUMMARY

Embodiments of the present disclosure present technological improvements as solutions to one or more of the above-mentioned technical problems recognized by the inventors in conventional systems.

For example, in one aspect, there is provided a processor implemented competitive pricing method assisted by generative artificial intelligence (GenAI) models. The method comprises receiving, via one or more hardware processors, an input comprising a pricing information and an associated information comprising at least one of one or more images and one or more videos pertaining to one or more competitor items specific to a category through at least one channel at a specific time for each competitor location for a predefined period; processing, via the one or more hardware processors, the pricing information pertaining to the one or more competitor items to obtain one or more dimensions of price variation for each competitor item for each competitor location at one or more dynamic time intervals by aggregating one or more obtained competitor prices for the one or more dynamic time intervals; generating, by a few-shot prompting using one or more multimodal generative artificial intelligence (GenAI) foundation models connected with a selective Retrieval Augmented Generation (RAG) repository, via the one or more hardware processors, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template; creating by instructions in prompt engineering via the one or more hardware processors, one or more binary values for each dimension of each influencing factor from the generated causative information at the specific time in specific to each competitor location for each trial of the trail mode; deriving a frequency for each dimension of each of the influencing factor from the binary values to obtain multiple dimensions of influencing factors at the one or more dynamic time intervals specific to each competitor location for each trial of the trail mode; associating, via the one or more hardware processors, the one or more dimensions of price variations to the one or more dimensions of each influencing factor for each competitor item and competitor location at the one or more dynamic time intervals through a canonical correspondence analysis; identifying, by using a feedback mechanism, via the one or more hardware processors, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals; arriving, via the one or more hardware processors, a competitive pricing enabler which captures a competitive pricing trend by associating the ideal combinations of dimensions of competitor price variations and the ideal combinations of dimensions of influencing factors in a multivariate multiple regression model; automatically adjusting, via the one or more hardware processors, the competitive pricing enabler to improve an associated accuracy based on a continuously changing competitor pricing trend by a continuous learning and feedback mechanism; pre-empting, by using the automatically adjusted competitive pricing enabler, via the one or more hardware processors, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations, and enabling, via the one or more hardware processors, an integration of a plurality of applications with the automatically adjusted competitive pricing enabler having the pre-empted one or more dimensions of competitor price variations to optimize one or more operations associated with competitive pricing, wherein the plurality of applications pertains to at least one of a pricing, a promotion, a mark down, and a clearance.

In an embodiment, the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

In an embodiment, one or more associated dimensions of an influencing factor include one or more dynamic types of the influencing factor which is generated and provided by the one or more multimodal GenAI foundation models under one or more trials of the trial mode.

In an embodiment, the ideal combinations of dimensions of the influencing factor are determined through a feedback mechanism.

In an embodiment, the selective RAG repository is a container with a selective stored information associated with each trail comprising an input, an output and one or more intermediate outcomes.

In an embodiment, the selective RAG repository enables the one or more multimodal GenAI foundation models (i) for an incremental learning based on an associated storage, and (ii) to adjust an associated latest response for a latest query for a context by learning one or more associated historical responses and queries.

In another aspect, there is provided a processor implemented competitive pricing enabler assisted by generative artificial intelligence (GenAI) models. The system comprises: a memory storing instructions; one or more communication interfaces; and one or more hardware processors coupled to the memory via the one or more communication interfaces, wherein the one or more hardware processors are configured by the instructions to receive an input comprising a pricing information and an associated information comprising at least one of one or more images and one or more videos pertaining to one or more competitor items specific to a category through at least one channel at a specific time for each competitor location for a predefined period; process the pricing information pertaining to the one or more competitor items to obtain one or more dimensions of price variation for each competitor item for each competitor location at one or more dynamic time intervals by aggregating one or more obtained competitor prices for the one or more dynamic time intervals; generate, by a few-shot prompting using one or more multimodal generative artificial intelligence (GenAI) foundation models connected with a selective Retrieval Augmented Generation (RAG) repository, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template; creating by instructions in prompt engineering, one or more binary values for each dimension of each influencing factor from the generated causative information at the specific time in specific to each competitor location for each trial of the trail mode; derive a frequency for each dimension of each of the influencing factor from the binary values to obtain multiple dimensions of influencing factors at the one or more dynamic time intervals specific to each competitor location for each trial of the trail mode; associate the one or more dimensions of price variations to the one or more dimensions of each influencing factor for each competitor item and competitor location at the one or more dynamic time intervals through a canonical correspondence analysis; identify, by using a feedback mechanism, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals; arrive a competitive pricing enabler which captures a competitive pricing trend by associating the ideal combinations of dimensions of competitor price variations and the ideal combinations of dimensions of influencing factors in a multivariate multiple regression model; automatically adjust the competitive pricing enabler to improve an associated accuracy based on a continuously changing competitor pricing trend by a continuous learning and feedback mechanism; pre-empt, by using the automatically adjusted competitive pricing enabler, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations; and enable an integration of a plurality of applications with the automatically adjusted competitive pricing enabler having the pre-empted one or more dimensions of competitor price variations to optimize one or more operations associated with competitive pricing, wherein the plurality of applications pertains to at least one of a pricing, a promotion, a mark down, and a clearance.

In an embodiment, the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

In an embodiment, one or more associated dimensions of an influencing factor include one or more dynamic types of the influencing factor which is generated and provided by the one or more multimodal GenAI foundation models under one or more trials of the trial mode.

In an embodiment, the ideal combinations of dimensions of the influencing factor is determined through a feedback mechanism.

In an embodiment, the selective RAG repository is a container with a selective stored information associated with each trail comprising an input, an output and one or more intermediate outcomes.

In an embodiment, the selective RAG repository enables the one or more multimodal GenAI foundation models (i) for an incremental learning based on an associated storage, and (ii) to adjust an associated latest response for a latest query for a context by learning one or more associated historical responses and queries.

In yet another aspect, there are provided one or more non-transitory machine-readable information storage mediums comprising one or more instructions which when executed by one or more hardware processors cause competitive pricing assisted by generative artificial intelligence (GenAI) models by receiving an input comprising a pricing information and an associated information comprising at least one of one or more images and one or more videos pertaining to one or more competitor items specific to a category through at least one channel at a specific time for each competitor location for a predefined period; processing the pricing information pertaining to the one or more competitor items to obtain one or more dimensions of price variation for each competitor item for each competitor location at one or more dynamic time intervals by aggregating one or more obtained competitor prices for the one or more dynamic time intervals; generating, by a few-shot prompting using one or more multimodal generative artificial intelligence (GenAI) foundation models connected with a selective Retrieval Augmented Generation (RAG) repository, causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template; creating by instructions in prompt engineering, one or more binary values for each dimension of each influencing factor from the generated causative information at the specific time in specific to each competitor location for each trial of the trail mode; deriving a frequency for each dimension of each of the influencing factor from the binary values to obtain multiple dimensions of influencing factors at the one or more dynamic time intervals specific to each competitor location for each trial of the trail mode; associating the one or more dimensions of price variations to the one or more dimensions of each influencing factor for each competitor item and competitor location at the one or more dynamic time intervals through a canonical correspondence analysis; identifying, by using a feedback mechanism, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals; arriving a competitive pricing enabler which captures a competitive pricing trend by associating the ideal combinations of dimensions of competitor price variations and the ideal combinations of dimensions of influencing factors in a multivariate multiple regression model; automatically adjusting the competitive pricing enabler to improve an associated accuracy based on a continuously changing competitor pricing trend by a continuous learning and feedback mechanism; pre-empting, by using the automatically adjusted competitive pricing enabler, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations; and enabling an integration of a plurality of applications with the automatically adjusted competitive pricing enabler having the pre-empted one or more dimensions of competitor price variations to optimize one or more operations associated with competitive pricing, wherein the plurality of applications pertains to at least one of a pricing, a promotion, a mark down, and a clearance.

In an embodiment, the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

In an embodiment, one or more associated dimensions of an influencing factor include one or more dynamic types of the influencing factor which is generated and provided by the one or more multimodal GenAI foundation models under one or more trials of the trial mode.

In an embodiment, the ideal combinations of dimensions of the influencing factor are determined through a feedback mechanism.

In an embodiment, the selective RAG repository is a container with a selective stored information associated with each trail comprising an input, an output and one or more intermediate outcomes.

In an embodiment, the selective RAG repository enables the one or more multimodal GenAI foundation models (i) for an incremental learning based on an associated storage, and (ii) to adjust an associated latest response for a latest query for a context by learning one or more associated historical responses and queries.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system 100 for arriving at a competitive pricing enabler assisted by generative artificial intelligence (GenAI) models, in accordance with an embodiment of the present disclosure.
FIG. 2 depicts an exemplary high level block diagram of the system 100 for arriving at the competitive pricing enabler assisted by generative artificial intelligence (GenAI) models, in accordance with an embodiment of the present disclosure.
FIG. 3A and FIG. 3B depict an exemplary flow chart illustrating a competitive pricing method assisted by generative artificial intelligence (GenAI) models, using the systems of FIG. 1-2, in accordance with an embodiment of the present disclosure.
FIG. 4 depicts a feedback mechanism for identifying the ideal combinations of dimensions of the influencing factor, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Understanding of market trend or overall business behavior with respect to price change strategy for different items is critical as it enables how market operates and how retailer differs from industry trend and what are the potential areas retailer needs to focus and what are the fine tuning he/she has to take. Embodiments of the present disclosure provide a competitive pricing enabler and method that are assisted by generative artificial intelligence (GenAI) models for identifying market trends. In an instance, competitor prices are captured to arrive market trend with respect to price change decisions. This enables the system and the method of the present disclosure to identify any gaps between competitor strategy and retailer strategy with respect to price change. In addition, item related information such as images and videos of the items are captured and stored, processed as described herein and used as required and used for enhancing the accuracy of pre-empting different dimensions.

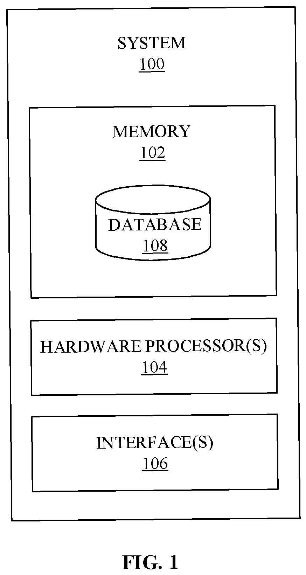

Referring now to the drawings, and more particularly to FIGS. 1 through 4, where similar reference characters denote corresponding features consistently throughout the figures, there are shown preferred embodiments, and these embodiments are described in the context of the following exemplary system and/or method.

FIG. 1 depicts an exemplary system 100 for arriving at a competitive pricing enabler assisted by generative artificial intelligence (GenAI) models, in accordance with an embodiment of the present disclosure. In the present disclosure, the expression 'GenAI models' is also referred to as 'multimodal GenAI foundation models' and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information a pricing information and an associated information that includes one or more images and/or one or more videos pertaining to one or more competitor items specific to a category through at least one channel (e.g., online channel and/or offline channel) at a specific time for each competitor location for a predefined period. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

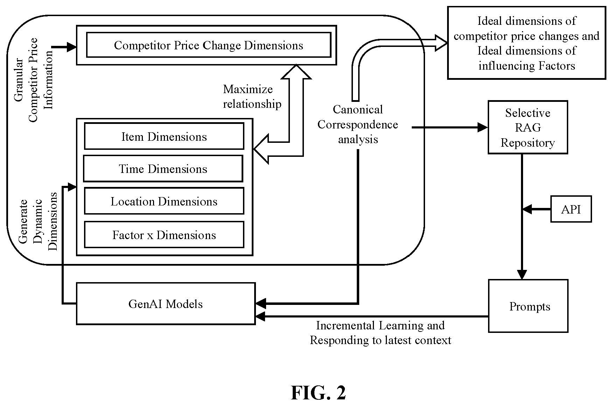

FIG. 2, with reference to FIG. 1, depicts an exemplary high level block diagram of the system 100 for arriving at a competitive pricing enabler assisted by generative artificial intelligence (GenAI) models, in accordance with an embodiment of the present disclosure.

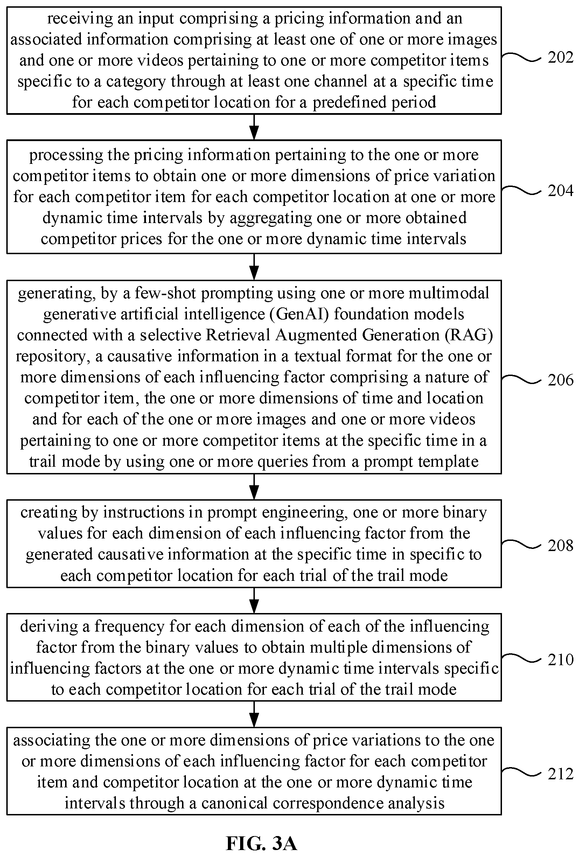

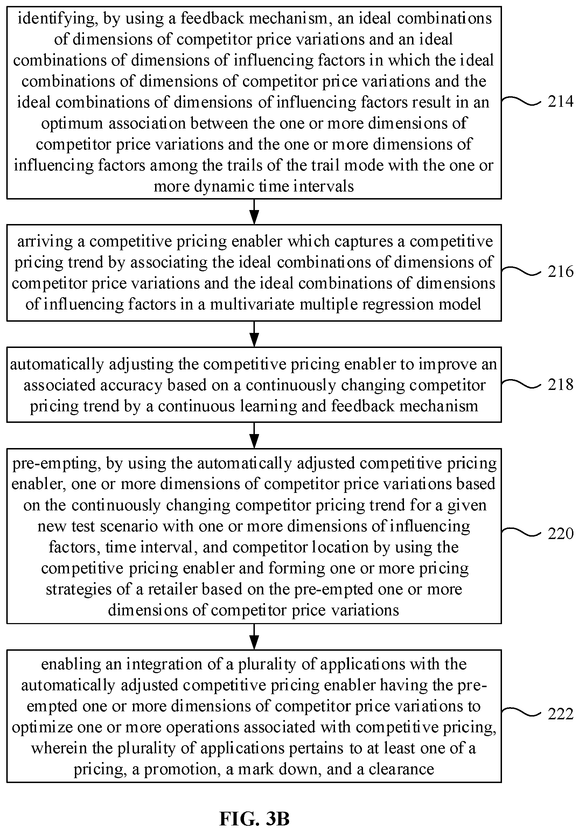

FIG. 3A and FIG. 3B, with reference to FIGS. 1-2, depict an exemplary flow chart illustrating a competitive pricing method assisted by generative artificial intelligence (GenAI) models, using the systems 100 of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagrams as depicted in FIGS. 3A-3B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive an input comprising a pricing information and an associated information comprising at least one of one or more images and one or more videos pertaining to one or more competitor items specific to a category through at least one channel at a specific time for each competitor location for a predefined period. Prices of each competitor item within a category are collected in different channels such as online or offline channels at a specific time (e.g., different point in time) such as every one hour, every day or every week for each competitor location for a pre-defined period. The items within a category are considered for collection of price information and those items which are not carried by retailer are also considered for collection of price information and it enables to identify industry standard and potential gap between retailer and competitor. The price of an item may be collected in brick- and-mortar stores through third-party vendors, and it may be collected online from competitor websites through crawling by suitable software available in the industry. Online prices of items are collected across locations as a few items may have different prices in online at a point in time for different locations of same competitor. In an instance, perishable items such as tomato, onion and other items may have different prices online due to different reasons such as the supply chain issues specific to the location. Price is collected at every hour, every day or every week to enable capturing of price changes happening in different phase by competitors specific to each of the items which are more competitive in nature. Prices are collected for a pre-defined period such as for the last year or two years to capture recent trends and seasonality. During crawling of online website for prices, images and videos of the items are also collected and they are used to generate information associated with the item using GenAI technologies and to associate the generated information with price changes. Below Table 1 illustrates the pricing information and the associated information as received in step 202.

**Table 1**

| **Item** | **Location** | **Date** | **Time** | **Competitor Price** | **Competitor Price Change** |
|---|---|---|---|---|---|
| SKU_1 | L1 | 01-01-24 | 7:00 AM | ------- | 0 |
| SKU_1 | L1 | 01-01-24 | 8:00 AM | ------- | 0 |
| SKU_1 | L1 | 01-01-24 | 9:00 AM | ------- | 0 |
| SKU_1 | L1 | 01-01-24 | ------- | ------- | 0 |
| SKU_1 | L1 | 01-01-24 | 8:00 PM | ------- | 1 |
| SKU_1 | L1 | 01-01-24 | 9:00 PM | ------- | 0 |
| SKU_1 | L1 | 02-01-24 | 7:00 AM | | 0 |
| SKU_1 | L1 | 02-01-24 | ------- | | -------- |
| SKU_1 | L1 | 02-01-24 | 9:00 PM | | 0 |
| SKU_1 | L1 | -------- | ------- | | 0 |
| SKU_1 | L1 | ------- | ------- | | 0 |
| SKU_1 | L1 | ------- | ------- | | 0 |
| SKU_1 | L1 | 12/29/...... | 7:00 AM | | 0 |
| SKU_1 | L1 | 12/29/...... | 8:00 AM | | 0 |
| SKU_1 | L1 | 12/29/...... | 9:00 AM | | 1 |
| SKU_1 | L1 | 12/29/...... | ------- | ------- | ------- |
| SKU_1 | L1 | 12/29/...... | 8:00 PM | ------- | 1 |
| SKU_1 | L1 | 12/29/...... | 9:00 PM | ------- | 0 |
| SKU_1 | L2 | 01-01-24 | 7:00 AM | | |
| SKU_1 | ------- | -------- | ------- | | |
| SKU_2 | L1 | 01-01-24 | 7:00 AM | ------- | 1 |
| SKU_2 | L1 | ------- | ------- | ------- | |
| ------- | ------- | ------- | -------- | ------- | |
| SKU_n | -------- | ------- | -------- | | |

At step 204 of the method of the present disclosure, the one or more hardware processors 104 process the pricing information pertaining to the one or more competitor items to obtain one or more dimensions of price variation for each competitor item for each competitor location at one or more dynamic time intervals by aggregating one or more obtained competitor prices for the one or more dynamic time intervals. The prices of each competitor item which are collected from online or offline or both for a predefined period are processed to capture different dimensions of price changes. In one instance, many measures are calculated for each item through aggregation and each measure represents one dimension of price changes. Example for few measures include co-efficient of variation, number of price changes, minimum value, maximum value, range, average value, inter quartile range and the like and these measures are derived for a dynamic period of time depending on the nature of category and are stored in the form of Table 2 below. The magnitude of different dimensions of price changes varies depending on the period of time used for aggregation.

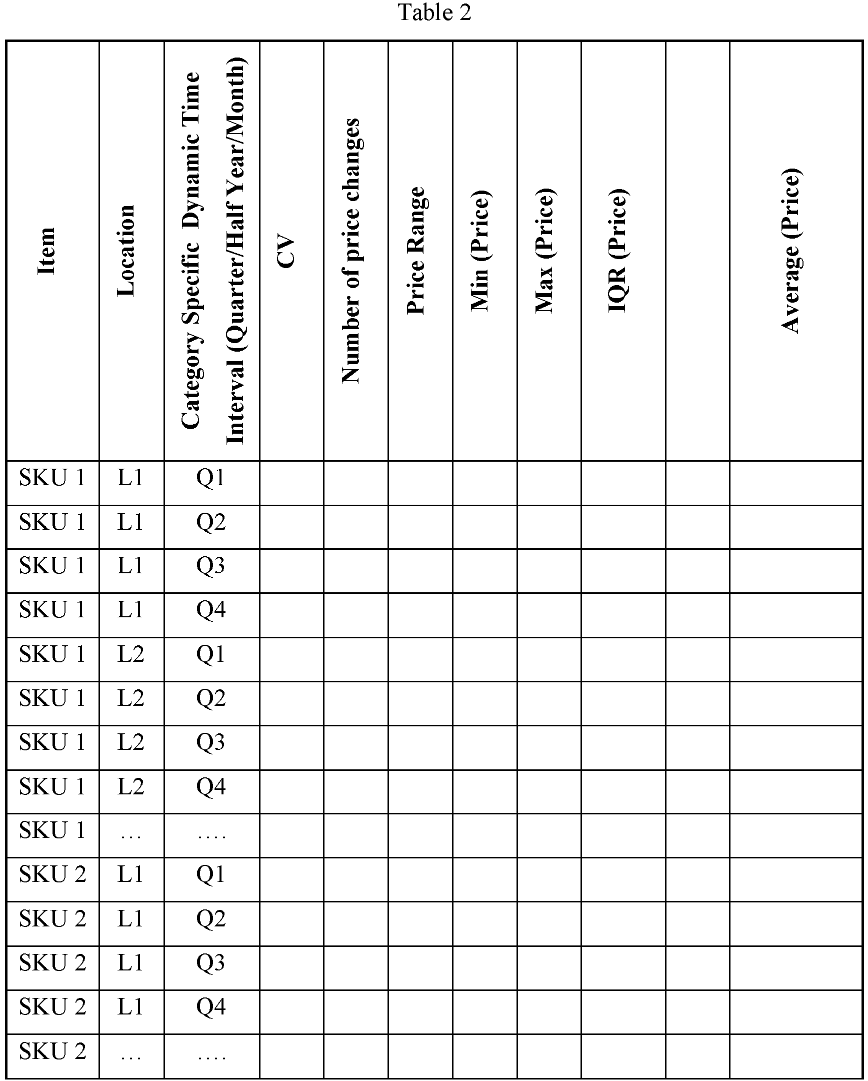

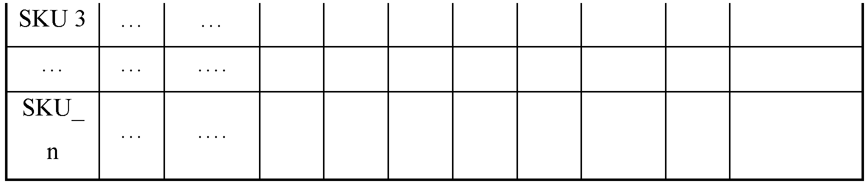

At step 206 of the method of the present disclosure, the one or more hardware processors 104 generating, by a few-shot prompting using one or more multimodal generative artificial intelligence (GenAI) foundation models, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template. In an embodiment, the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode. The above step 204 is better understood by way of the following description.

Competitor price of an item is decided by many factors such as nature of item, different dimensions of time and location of price change and the like and they are termed as influencing factors. Each influencing factor may have many dimensions, and these dimensions are generated using multi modal GenAI foundation models under different trails in an iterative way. Multi modal GenAI foundation models are capable of generating textual response for a query given by user with respect to a context by accepting prompts that are a mixture of text, audio, images, and video. Gemini from Google, GPT-4o from Azure are few examples of multi modal foundation models with generative and conversational AI experience. In an instance, different dimensions with respect to nature of competitor items are generated by using queries in prompt template from multimodal GenAI foundation models as depicted in Tables 3A through 3C.

**Table 3A**

| |
|---|
| Can you suggest 50 types of categorizations by all means for the list of SKUs. |
| GenAI Response: - |
| Certainly! Categorizing the listed SKUs can be done in various ways based on different attributes like nutritional content, culinary use, plant family, part of plant, color, flavor profile, and much more. Here are 50 ways to categorize these items: |
| Part of Plant: Fruit, leaf, seed, or stem. |
| Glycemic Index: Low GI vs. high GI. |
| Acidity: Acidic, neutral, or alkaline. |
| Popularity: Commonly consumed vs. less commonly known. |
| Availability: Year-round vs. seasonal availability. |
| Price Range: Economical vs. premium priced. |
| Storage: Refrigerated vs. non-refrigerated. |
| Cultural Significance: Used in specific cultural dishes. |
| Medicinal Uses: Known for health benefits or used in herbal medicine. |
| Preparation Time: Quick to prepare vs. requiring more time. |
| Versatility: Multiple uses vs. more specialized use. |
| Packaging: Sold in bulk, pre-packaged, or requires special packaging. |
| Processing: Eaten as is, or requires processing (peeling, deseeding). |
| Imported vs. Locally Grown: Depending on the store's supply chain. |
| Serving Size: Typically eaten in small quantities vs. larger portions. |
| Ethical Farming Practices: Fair trade, locally sourced, etc. |
| Pesticide Use: Known for heavy vs. light pesticide use in farming. |
| Pairings: Foods that pair well with others (for cheese, wine, etc.). |
| Juiciness: Very juicy vs. less juicy. |
| Dietary Fiber Content: High-fiber vs. lower-fiber options. |
| Skin Edible vs. Inedible: Whether the skin can be eaten or not. |
| Seed Presence: Seedless vs. containing seeds. |
| Herbicide Use: Tendency to be genetically modified to resist herbicides. |
| Smooth vs. Textured Skin: Smooth-skinned fruits vs. rough or leafy greens. |
| Protein Content: Higher protein vs. lower protein. |
| Fat Content: Contains healthy fats (for some people). |
| Part of Plant: Fruit, leaf, seed, or stem. |
| **Glycemic Index: Low GI vs. high GI.** |
| Acidity: Acidic, neutral, or alkaline. |
| Popularity: Commonly consumed vs. less commonly known. |
| Availability: Year-round vs. seasonal availability. |
| Price Range: Economical vs. premium priced. |
| Storage: Refrigerated vs. non-refrigerated. |
| **Cultural Significance: Used in specific cultural dishes.** |
| **Medicinal Uses: Known for health benefits or used in herbal medicine.** |
| Preparation Time: Quick to prepare vs. requiring more time. |
| Versatility: Multiple uses vs. more specialized use. |
| Packaging: Sold in bulk, pre-packaged, or requires special packaging. |
| Processing: Eaten as is, or requires processing (peeling, deseeding). |
| Imported vs. Locally Grown: Depending on the store's supply chain. |
| Serving Size: Typically eaten in small quantities vs. larger portions. |
| Ethical Farming Practices: Fair trade, locally sourced, etc. |
| Pesticide Use: Known for heavy vs. light pesticide use in farming. |
| Pairings: Foods that pair well with others (for cheese, wine, etc.). |
| Juiciness: Very juicy vs. less juicy. |
| Dietary Fiber Content: High-fiber vs. lower-fiber options. |
| Skin Edible vs. Inedible: Whether the skin can be eaten or not. |
| Seed Presence: Seedless vs. containing seeds. |
| Herbicide Use: Tendency to be genetically modified to resist herbicides. |
| Smooth vs. Textured Skin: Smooth-skinned fruits vs. rough or leafy greens. |
| Protein Content: Higher protein vs. lower protein. |
| Fat Content: Contains healthy fats |

**Table 3B**

| **Example - Item Enrichment - Capturing 'Qualitative nature of item'** |
|---|
| GenAI Response: - |
| 1. Highly Perishable (Consume within a few days to a week): |
| These items typically spoil quickly and are best when fresh. |
| Spinach, Mustard Greens, Fenugreek Leaves, etc. |
| Leafy greens and herbs tend to wilt and spoil quickly, especially if not stored properly. They usually need to be refrigerated and consumed within a short time after purchase. |
| 2. Moderately Perishable (Last about 1-2 weeks): |
| These fruits and vegetables have a slightly longer shelf life but should still be used relatively quickly. |
| Strawberries, Peaches, Avocados |
| Fruits like strawberries and peaches can spoil within a week or so if not refrigerated, while avocados may last a little longer but are sensitive to ripening speed and can quickly become overripe. |
| 3. Semi-Perishable (Last about 2-4 weeks): |
| These items have a moderate shelf life under proper storage conditions. Grapes, Bananas |
| Grapes can last several weeks if kept in a cool, ventilated space, and bananas can last a couple of weeks, depending on their ripeness when purchased. |
| 4. Less Perishable (Last about 1-2 months): |
| These fruits can be stored for a longer period under the right conditions. |
| Apples |
| Oranges |
| Apples and oranges have a longer shelf life and can last quite a while if they are stored in a cool, dry place or in the crisper drawer of a refrigerator. |
| 5. Non-Perishable (Last several months under proper storage): |
| None of the items on your list are truly non-perishable, as all fresh produce will eventually spoil. However, under ideal conditions, apples and oranges can last for a surprisingly long time compared to other produce. |

**Table 3C**

| **Example** - **Item Enrichment - Capturing 'Qualitative nature of item'** |
|---|
| **............** |
| GenAI Response: - |
| 4. Less Perishable (Last about 1-2 months): |
| These fruits can be stored for a longer period under the right conditions. |
| Apples |
| Oranges |
| Apples and oranges have a longer shelf life and can last quite a while if they are stored in a cool, dry place or in the crisper drawer of a refrigerator. |
| 5. Non-Perishable (Last several months under proper storage): |
| None of the items on your list are truly non-perishable, as all fresh produce will eventually spoil. However, under ideal conditions, apples and oranges can last for a surprisingly long time compared to other produce. |
| ......Cultural Significance: Used in specific cultural dishes. |

Here, it is expected that the textual response generated by GenAI models carry reasons for price change, in particular, nature of items which may lead to price change. In an instance, item with low Glycemic index (GI) may lead to price change during start of month in urban area and here, textual answer with GI is given by GenAI model as depicted in Tables 3A and 6B. GenAI provides list of SKUs with low GI which is not shown in Table 3A.

The prompt template is accessible for SMEs through suitable interface and SME can update the prompt template based on relevancy of the text provided by multimodal GenAI foundation models. In an instance, the prompt template has a set of predefined queries, and it can be updated by SMEs based on business expertise and current relevancy of text and level of granularity. It is expected that the queries need to be formed by SMEs to extract text information towards nature of item, nature of time, nature of location and the like. Accuracy of extracting reasons for price change depends on the quality of queries given by SMEs. In an instance, as listed in table 3A, the query is noted as "Can you suggest 50 types of categorizations by all means for the list of skus?" and here, only list of categorizations is shown in table 3A. The list of SKUs and their categorization done by GenAI is not shown in table 3A. Values under each category may form an input for a trial. In an example, SKUs with low GI and SKUs with high GI may form a trial as shown in table 3A. Each trial generates a set of dimensions for items and every trial will differ from each other.

In another instance, different dimensions of timestamp of a price change are generated as depicted in Table 4. Here, it is expected that the textual response generated by GenAI models carry time related information associated with reason for price change. In an instance, an item displayed on winter morning may face price change as depicted in Tables 4 and 6B. Similarly different dimensions of location and the like are generated as depicted in Table 5A. Here, it is expected that the textual response generated by GenAI models carry reasons for price change, in particular, location specific reasons.

**Table 4**

| Time_stam p | Day of the week | Weekend/weekd ay | Stage of the month | Winter/summ ar | ... | Part of the day |
|---|---|---|---|---|---|---|
| 2/4/23 8:23 AM | Saturda y | Weekend | First weekend of the month | Winter weekend | | Mornin g |
| 2/6/23 6:23 PM | Monda y | Weekday | First weekday of the month | Winter weekdays | | Evenin g |
| ... | ... | ... | ... | ... | ... | ... |
| 2/14/23 1:23 PM | Tuesda y | Weekday | Third weekday of the month | Winder weekdays | | Noon |
| ... | ... | ... | ... | ... | ... | ... |
| 12/20/22 5:15 PM | | | | | | |

**Table 5A**

| **Example - Location Enrichment** |
|---|
| GenAI Response: - |
| Categorizing the items based on ethnic utilization within the United States by states can be challenging because there is a significant overlap in the use of these fruits and vegetables among various ethnic groups. However, some produce may be more commonly used in certain cuisines. Here's a general categorization that takes into account regional preferences and the prominence of certain ethnic cuisines in different states: |
| 1. Commonly Used Across Multiple Cuisines: |
| Apples, Bananas, Grapes, Oranges, ... |
| These fruits and vegetables are staples in American diets and are widely used across the country, regardless of ethnic background. |
| 2. Hispanic/Latin American Cuisine: |
| Avocados |
| Spinach (used in dishes like 'espinacas con garbanzos') |
| Radish Greens (often used in Mexican cuisine) |
| States with a higher Hispanic population, such as California, Texas, Florida, New Mexico, and Arizona, may see a higher utilization of these products in Hispanic/Latin American dishes. |

**Table 5B**

| **Example - Location Enrichment** |
|---|
| ........... |
| GenAI Response: - |
| 3. South Asian Cuisine: |
| Fenugreek Leaves (often used in Indian dishes) |
| Amaranth Leaves (used in Indian and other South Asian cuisines) |
| Drumstick Leaves (common in South Indian cuisine) |
| States with significant South Asian communities, such as New Jersey, New York, California, and Illinois, may find these items used more frequently in South Asian dishes. |
| 4. African and Caribbean Cuisine: |
| Mustard Greens (used in African American and Southern cooking, also in some African cuisines) |
| Collard Greens (similar to mustard greens, often used in Southern and African American cooking) |
| While not listed, collard greens are akin to mustard greens and are popular in Southern states and areas with larger African American populations. |
| 5. Southeast Asian/Pacific Cuisine: |
| Basella Alba (Malabar spinach is used in Filipino and other Southeast Asian cuisines) |
| Colocasia Leaves (used in dishes from Hawaii and by various Asian communities) States like Hawaii, which has a large Filipino population, or coastal states with diverse Asian communities like California and Washington, may see more utilization of these greens. |

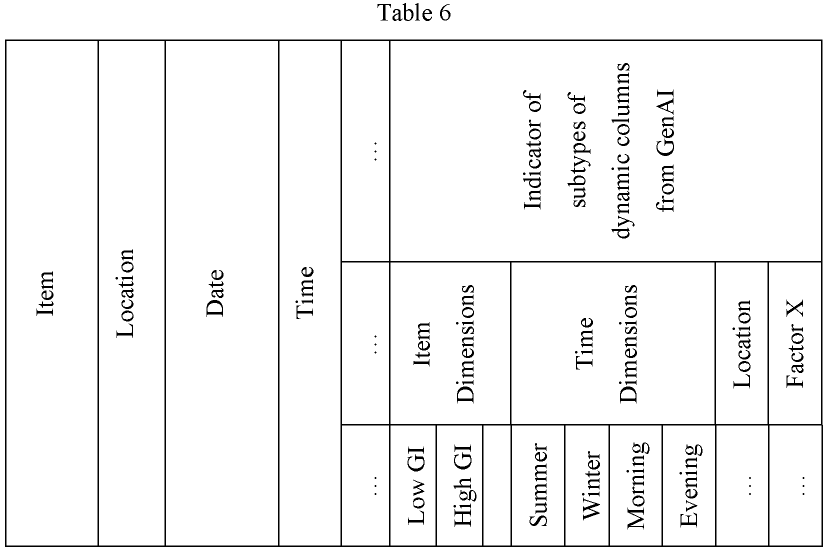

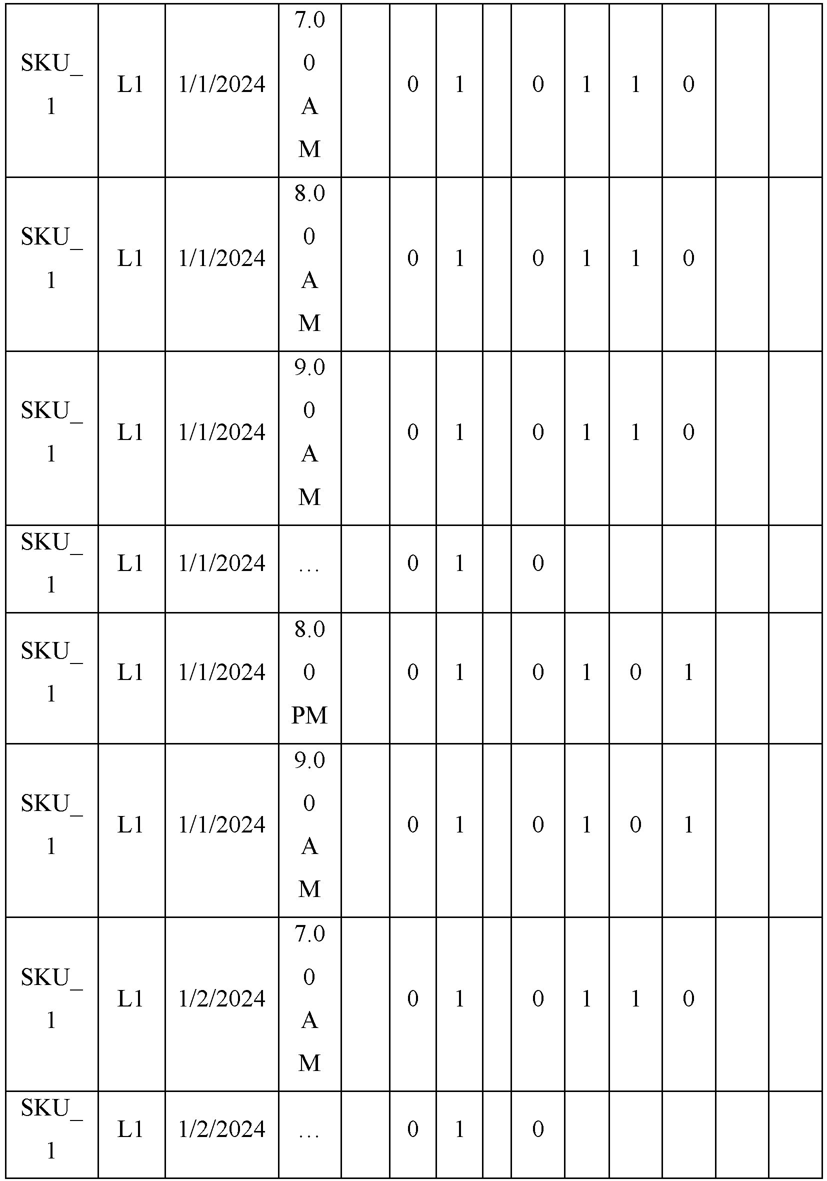

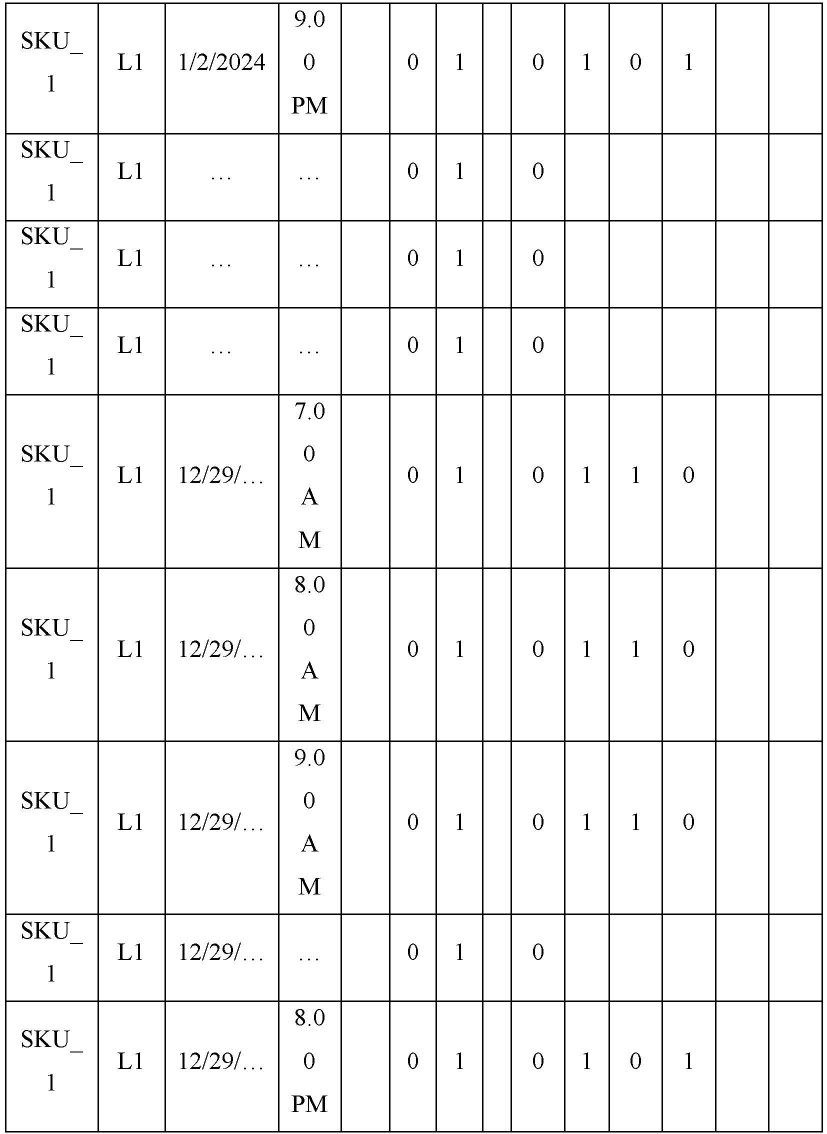

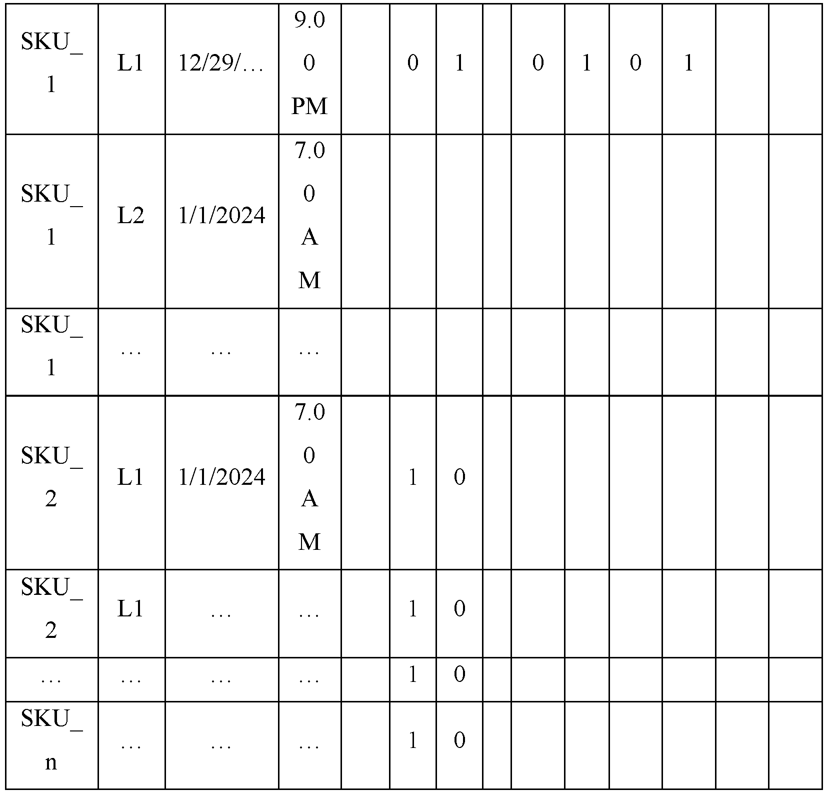

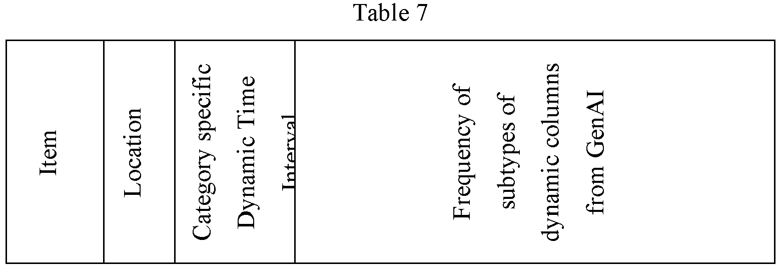

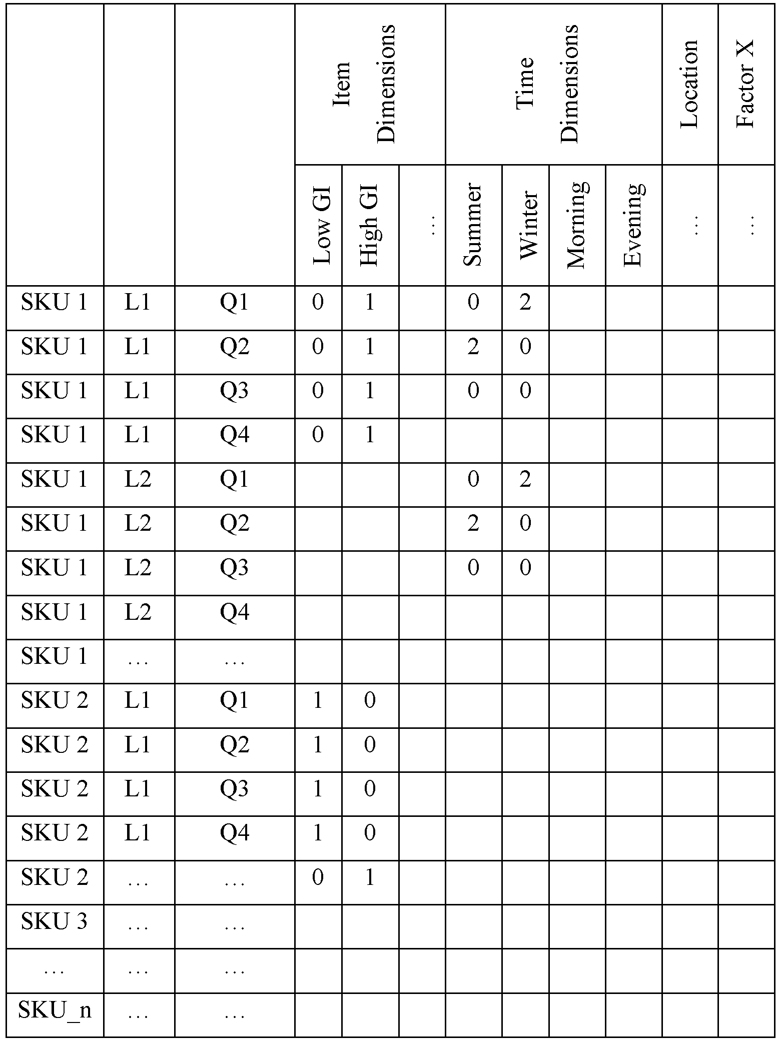

During crawling of competitor prices of items, additional information such as Images and videos of competitor items are also collected along with time stamp and these images and videos are passed into multimodal GenAI foundation models and relevant text specific to each image and video specific to each item is received through suitable instructions in prompt engineering as per industry standards. In a few instances, videos are processed into series of images and passed into multimodal GenAI foundation models to get text associated with the image or series of images.

It is expected that the texts generated from images and videos by GenAI models carry additional information associated with each competitor item and they add additional value in identifying the reason for price change of competitor items.

At step 208 of the method of the present disclosure, the one or more hardware processors 104 create by instructions in prompt engineering one or more binary values for each dimension of each influencing factor from the generated causative information at the specific time in specific to each competitor location for each trial of the trail mode.

At step 210 of the method of the present disclosure, the one or more hardware processors 104 derive a frequency for each dimension of each of the influencing factor from the binary values to obtain multiple dimensions of influencing factors at the one or more dynamic time intervals specific to each competitor location for each trial of the trail mode. The steps 208 and 210 are better understood by way of the following description:

The information received from GenAI for the queries will be in textual format which is processed in many ways within the scope of present disclosure. In an instance, the raw information from Tables 3, 4, and 5A-5B is processed into binary coding as depicted in Table 6 and it is carried out through suitable instructions in prompt engineering as per industry standards. The binary values of Table 6 are aggregated into a frequency as depicted in Table 7 and it is done to enable applying canonical correspondence analysis.

At step 212 of the method of the present disclosure, the one or more hardware processors 104 associate the one or more dimensions of price variations to the one or more dimensions of each influencing factor for each competitor item and competitor location at the one or more dynamic time intervals through a canonical correspondence analysis.

The processed information of Table 7 is associated with processed information of Table 2 through canonical correspondence analysis by using common keys between these two tables namely columns denoting items, location and dynamic time interval. Here Table 7 has frequency information of each influencing factor and Table 2 has different dimensions of competitor price changes. Thus, frequencies of each dimension of each influencing factor of each competitor item are associated with different aggregated measures of price changes of each competitor item through canonical correspondence analysis under different trails. Canonical correspondence analysis is a multivariate technique for finding patterns among combinations of variables in a dataset with frequency information. Frequency of each dimension will vary depending on the dynamic time interval used. For every trial, different dimensions of each influencing factor are used for testing the association between dimension of price changes and dimensions of respective influencing factors. In an instance, an influencing factor namely nature of item may have fifty different dimensions generated in different trial by multi modal GenAI and each dimension of nature of item is tested in a separate trail individually and it is continued until all the dimensions of nature of items are tested individually. The fifty different dimensions are generated by multimodal GenAI and passed into canonical correspondence analysis through suitable interface. In a similar way, nature of time and nature of location are tested under different trials individually and also in combination with ideal dimension of other influencing factors. Here the ideal dimension of an influencing factor refers to the dimension of the respective influencing factor that produces optimal relationship within the respective influencing factor which is explained in next section. During each trail, input, output, intermediates of canonical correspondence analysis are stored as a RAG document in a container termed as selective RAG repository (stored in the memory 102) and the process is repeated for all the trials as a continuous incremental process. RAG repository is referred to GenAI through suitable prompts and APIs during prompt engineering as depicted in FIG. 2.

Canonical correspondence analysis under each trial is performed to mine all possible linear combinations of dimensions of price variations which provides top linear combinations and in common it is noted as a set of price variation patterns. In the same way, it attempts to mine all possible linear combinations of dimensions of influencing factors and in common it is noted as 'a set of influencing factor patterns.

At step 214 of the method of the present disclosure, the one or more hardware processors 104 identify, by using a feedback mechanism, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals. Dimensions of an influencing factor include one or more dynamic types of the influencing factor which is generated and provided by multimodal GenAI foundation model using queries in prompt template under different trials of trial mode and the ideal final combinations of dimensions of the influencing factor is decided by competitive pricing enabler through feedback mechanism, in one example embodiment. The step 214 is better understood by way of the following description:

The multiple dimensions of each influencing factor are dynamic which serves as the generated inputs from GenAI under different trials. The output of each trial varies as depicted in above Tables. This leads to dynamic output from canonical correspondence analysis. Price variation patterns and influencing factor patterns among different trials are identified by canonical correspondence analysis such that the association between price variation pattern and influencing factor pattern is optimum.

The accuracy of canonical correspondence analysis is measured from total variance explained by combination of dimensions of price variation and combination of dimensions of influencing factors. The combination of dimensions of price variation is termed as ideal if it explains total variance optimally and combination of dimensions of influencing factors is termed as ideal if it explains total variance optimally. Accuracy of a trail is measured based on the total variance explained for the trail which has arrived by adding the total variance explained by combination of dimensions of price variation and the total variance explained by combination of dimensions of influencing factors for the trail.

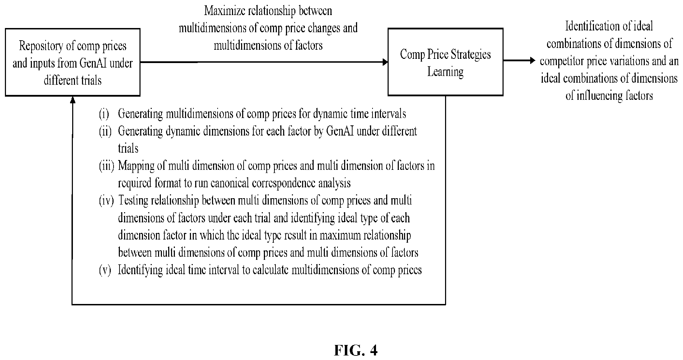

The accuracy of results is improved through feedback mechanism by series of iteration by including the inputs generated in different trails and also the dynamic time interval used for both price variation and factor pattern and it is continued until optimal accuracy is obtained. Canonical correspondence analysis tries to find ideal combinations of dimensions of price variations and ideal combinations of dimensions of influencing factors which will optimize their association to the possible extent through feedback mechanism. FIG. 4, with reference to FIGS. 1 through 3B, depicts a feedback mechanism for identifying the ideal combinations of dimensions of the influencing factor, in accordance with an embodiment of the present disclosure.

At step 216 of the method of the present disclosure, the one or more hardware processors 104 arrive a competitive pricing enabler which captures a competitive pricing trend by associating the ideal combinations of dimensions of competitor price variations and the ideal combinations of dimensions of influencing factors in a multivariate multiple regression model. The ideal combinations of dimensions of competitor price variations are used as dependent variables and ideal combinations of dimensions of influencing factors are used as independent variables in multivariate multiple regression model to form the competitive pricing enabler. There are provisions in open-source software to consider multi-columns as dependent variables in the multivariate multiple regression model. In one example, Random Forest SRC package from R software has provision to consider multi columns as dependent variable in the multivariate multiple regression model. Competitive pricing enabler is capable of pre-empting competitor price variations for a given influencing factor.

At step 218 of the method of the present disclosure, the one or more hardware processors 104 automatically adjust the competitive pricing enabler to improve an associated accuracy based on a continuously changing competitor pricing trend by a continuous learning and feedback mechanism. The step 218 is better understood by way of the following description:

In one instance, the system 100 adjusts time interval used to derive dimensions of price variation based on nature of retailing. For example, the competitive pricing enabler uses longer duration for an electronic retailer as compared to grocery retailer during dynamic time interval formation.

The competitive pricing enabler learns the mechanism continuously and improves its accuracy by adjusting its parameters automatically in many ways. In GenAI term, context refers to background knowledge that helps in understanding a situation or task. As depicted in Table 6 and Table 7, nature of item, time and location may form part of context. GenAI connected with a selective RAG repository learns contextual information continuously and readjusts its response by considering all its historical responses. Thus, GenAI can understand and interpret the context of a given situation or query to provide fine-tuned responses each and every time.

During each trail, information such as an input, an output, and one or more intermediate outcomes of canonical correspondence analysis are stored as a RAG document in a container termed as selective RAG repository and the process is repeated for all the trials as a continuous incremental process. It is to be noted that during storage, information of each trial is validated and quantified through accuracy measures of canonical correspondence analysis and ranked as per their relevancy to intermediate outcome and end objectives and it is done to improve technical efficiency. In an instance, information such as input, output and intermediate outcomes of canonical correspondence analysis, is ranked as per their contribution in terms of their contribution to association between the one or more dimensions of competitor price variations and the one or more dimensions of influencing factors. The system 100 allows only the top ranked information to be stored in the selective RAG repository as per storage capacity by removing the noise. The ranked information allows the system 100 to prioritize the information to be stored as per availability of memory for storage. This leads to reduced vector store during RAG document creation in the selective RAG repository and it leads to reduced number of tokens to provide context specific response by GenAI foundation models. Thus, quantification of information enables the system 100 to reduce compute memory requirement and lead towards technical efficiency and cost efficiency.

Selective RAG repository is referred to GenAI through suitable prompts and APIs during prompt engineering as depicted in FIG. 2.

Thus, creation of selective RAG repository and its interaction with GenAI through suitable API enables the one or more GenAI foundation models to learn contextual information continuously and readjusts its latest response by considering all its historical responses and queries in a continuous way. In GenAI term, context refers to background knowledge that helps in understanding a situation or task. The combination of (a) GenAI, (b) query template which is updated by SME at frequent intervals (c) specific format of Table 6 and Table 7, (d) canonical correspondence analysis, (e) selective RAG repository, and (f) feedback mechanism enables continuous learning and automatic adjustment of response(s), and the adjustment happens until optimal accuracy is obtained. It is to be understood by a person having ordinary skill in the art or a person skilled in the art that examples provided in the Table 1 through 7 shall not be construed as limiting the scope of the present disclosure. Further, location dimensions in the above-described Tables include but are not limited to Rural, Urban and the like.

In another instance, the competitive pricing enabler tries to experiment with the learning by changing different starting points to arrive different time intervals to arrive different dimensions of competitor prices as per changing businesses scenarios. Combination of different starting point in time and different time interval such as month, quarter or half year enables to derive different time intervals with varying starting point of the year and thus it enables to identify the suitable combination of inputs that optimize the association between different dimensions of competitor prices and different dimensions of causative factors. For example, as per US climate, summer is considered as June, July and August and in an instance a quarter starting with 1st June may explain the variation better and it may be identified due to self-experiment by the competitive pricing enabler.

In addition, the competitive pricing enabler has options to get real time inputs from different sources during prompt engineering and readjusts the input parameters to adopt to real time changes. Uniform Resource Locators (URLs) specific to causative factors such as weather, traffic and the like (e.g., also referred to as Factor X dimensions, and interchangeably used herein) are updated as prompts during prompt engineering phase of GenAI and thus GenAI is empowered with providing real time information required to augment the model in agile way. In an instance, as per latest information from GenAI prompted with meteorological website, the start of summer may be delayed by one week and the enabler may readjust the starting point in time for dynamic time interval formation. Thus, this helps the system 100 to update the mechanism as per the changing real time situations.

At step 220 of the method of the present disclosure, the one or more hardware processors 104 pre-empting, by using the automatically adjusted competitive pricing enabler, one or more dimensions of competitor price variations based on the continuously changing competitor pricing trend for a given new test scenario of near future with one or more dimensions of influencing factors, time interval, and competitor location by using the competitive pricing enabler and forming one or more pricing strategies of a retailer based on the pre-empted one or more dimensions of competitor price variations.

Retailers form pricing strategy season wise by considering localized competition. Inputs specific to a category is passed into competitive pricing enabler and pre-empting is done for each location and the inputs specific to a category include ideal dimensions of influencing factors, time interval, location, other factors and real time inputs. Here, the type of influencing factors and time interval are the ones which were identified by the system 100 as ideal. Real time inputs such as interruptions in logistic and other real time inputs are received from URLs mentioned as prompts during prompt engineering.

At step 222 of the method of the present disclosure, the one or more hardware processors 104 enable an integration of a plurality of applications with the automatically adjusted competitive pricing enabler having the pre-empted one or more dimensions of competitor price variations to optimize one or more operations associated with competitive pricing. The plurality of applications pertains to at least one of a pricing, a promotion, a mark down, a clearance, and the like associated with items.

Each dimension of pre-empted competitor price change indicates unique information about competitor price change. In an instance, range of price change indicates different information as compared to number of price changes. In a similar way, coefficient of variation (CV), min value, max value, average, and others indicate unique information about price change followed by competitor. Multiple dimensions of competitor price changes are pre-empted simultaneously, and it enables the retailer to use the pre-empted dimensions in many ways by suitable integration of competitive pricing enabler with other systems. In one instance, competitive pricing enabler may be integrated into many systems associated with pricing, promotion, mark down, clearance, advertisement and the like at corporate level to leverage readily available pre-empted competitor information for different retail strategic operations. In an instance, retailers having strategy of 'low price guarantee' usually may face margin erosion due to lower prices as compared to competitors. By integrating competitive pricing enabler with pricing system, pricing can be achieved competitively with minimal loss of margin while applying low price guarantee, as competitive pricing enabler indicates competitor strategy in advance and enables the pricing system to plan in advance. In another instance, promotion module receives multiple dimensions of competitor prices of items for near future in advance and accordingly it enables to fine tune different time dimensions of retailer promotion such as start date, end date of a season for promotion for a location. In another instance, markdown module receives multiple dimensions of competitor prices of items, and it enables location specific items that need to be considered for mark down and the same logic may be applied for clearance sales module also. In another instance, competitive pricing enabler may be accessible by category managers or store managers at each location to enable localized decision making for the near future in advance.

Embodiments of the present disclosure provide a system and method to decide price change for an item by comparing industry overall behaviour. Price change of an item is looked in multi-dimensional and the dimensions of price change for a scenario are derived through unique data processing. For instance, the in the present disclosure, competitor price of each item is gathered at hour level over a period of time for many competitors and (a) n dimensions of price variations for an item are created and (b) m dimensions of each influencing factor for the item are generated using advanced technologies as known in the art. Further, frequency of each dimension of each influencing factor is derived through series of data processing to enable for applying advanced analytical techniques (a) and (b) are mapped to establish the association between them though advanced analytical techniques and ideal combinations of dimensions of price variations and ideal combinations of dimensions of factors which will maximize their association are derived through feedback mechanism. For a given dimension of each influencing factor, expected dimensions of price variation and its values are predicted using the identified combinations of dimensions of factors and its values.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, an input comprising a pricing information and an associated information comprising at least one of one or more images and one or more videos pertaining to one or more competitor items specific to a category through at least one channel at a specific time for each competitor location for a predefined period (202);
processing, via the one or more hardware processors, the pricing information pertaining to the one or more competitor items to obtain one or more dimensions of price variation for each competitor item for each competitor location at one or more dynamic time intervals by aggregating one or more obtained competitor prices for the one or more dynamic time intervals (204);
generating, by a few-shot prompting using one or more multimodal generative artificial intelligence (GenAI) foundation models connected with a selective Retrieval Augmented Generation (RAG) repository, via the one or more hardware processors, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template (206);
creating by instructions in prompt engineering via the one or more hardware processors, one or more binary values for each dimension of each influencing factor from the generated causative information at the specific time in specific to each competitor location for each trial of the trail mode (208);
deriving a frequency for each dimension of each of the influencing factor from the binary values to obtain multiple dimensions of influencing factors at the one or more dynamic time intervals specific to each competitor location for each trial of the trail mode (210);
associating, via the one or more hardware processors, the one or more dimensions of price variations to the one or more dimensions of each influencing factor for each competitor item and competitor location at the one or more dynamic time intervals through a canonical correspondence analysis (212);
identifying, by using a feedback mechanism, via the one or more hardware processors, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals (214);
arriving, via the one or more hardware processors, a competitive pricing enabler which captures a competitive pricing trend by associating the ideal combinations of dimensions of competitor price variations and the ideal combinations of dimensions of influencing factors in a multivariate multiple regression model (216);
automatically adjusting, via the one or more hardware processors, the competitive pricing enabler to improve an associated accuracy based on a continuously changing competitor pricing trend by a continuous learning and feedback mechanism (218);
pre-empting, by using the automatically adjusted competitive pricing enabler, via the one or more hardware processors, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations (220); and
enabling, via the one or more hardware processors, an integration of a plurality of applications with the automatically adjusted competitive pricing enabler having the pre-empted one or more dimensions of competitor price variations to optimize one or more operations associated with competitive pricing (222), wherein the plurality of applications pertains to at least one of a pricing, a promotion, a mark down, and a clearance.

2. The processor implemented method as claimed in claim 1, wherein the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

3. The processor implemented method as claimed in claim 1, wherein one or more associated dimensions of an influencing factor include one or more dynamic types of the influencing factor which is generated and provided by the one or more multimodal GenAI foundation models under one or more trials of the trial mode, and wherein the ideal combinations of dimensions of the influencing factor is determined through a feedback mechanism.

4. The processor implemented method as claimed in claim 1, wherein the selective RAG repository is a container with a selective stored information associated with each trail comprising an input, an output and one or more intermediate outcomes, and wherein the selective RAG repository enables the one or more multimodal GenAI foundation models (i) for an incremental learning based on an associated storage, and (ii) to adjust an associated latest response for a latest query for a context by learning one or more associated historical responses and queries.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive an input comprising a pricing information and an associated information comprising at least one of one or more images and one or more videos pertaining to one or more competitor items specific to a category through at least one channel at a specific time for each competitor location for a predefined period;
process the pricing information pertaining to the one or more competitor items to obtain one or more dimensions of price variation for each competitor item for each competitor location at one or more dynamic time intervals by aggregating one or more obtained competitor prices for the one or more dynamic time intervals;
generate, by a few-shot prompting using one or more multimodal generative artificial intelligence (GenAI) foundation models connected with a selective Retrieval Augmented Generation (RAG) repository, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template;
create by instructions in prompt engineering, one or more binary values for each dimension of each influencing factor from the generated causative information at the specific time in specific to each competitor location for each trial of the trail mode;
derive a frequency for each dimension of each of the influencing factor from the binary values to obtain multiple dimensions of influencing factors at the one or more dynamic time intervals specific to each competitor location for each trial of the trail mode;
associate the one or more dimensions of price variations to the one or more dimensions of each influencing factor for each competitor item and competitor location at the one or more dynamic time intervals through a canonical correspondence analysis;
identify, by using a feedback mechanism, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals;
arrive a competitive pricing enabler which captures a competitive pricing trend by associating the ideal combinations of dimensions of competitor price variations and the ideal combinations of dimensions of influencing factors in a multivariate multiple regression model;
automatically adjust the competitive pricing enabler to improve an associated accuracy based on a continuously changing competitor pricing trend by a continuous learning and feedback mechanism;
pre-empt, by using the automatically adjusted competitive pricing enabler, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations; and
enable an integration of a plurality of applications with the automatically adjusted competitive pricing enabler having the pre-empted one or more dimensions of competitor price variations to optimize one or more operations associated with competitive pricing, wherein the plurality of applications pertains to at least one of a pricing, a promotion, a mark down, and a clearance.

6. The system as claimed in claim 5, wherein the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

7. The system as claimed in claim 5, wherein one or more associated dimensions of an influencing factor include one or more dynamic types of the influencing factor which is generated and provided by the one or more multimodal GenAI foundation models under one or more trials of the trial mode, and wherein the ideal combinations of dimensions of the influencing factor is determined through a feedback mechanism.

8. The system as claimed in claim 5, wherein the selective RAG repository is a container with a selective stored information associated with each trail comprising an input, an output and one or more intermediate outcomes, and wherein the selective RAG repository enables the one or more multimodal GenAI foundation models (i) for an incremental learning based on an associated storage, and (ii) to adjust an associated latest response for a latest query for a context by learning one or more associated historical responses and queries.

9. One or more non-transitory machine-readable information storage mediums comprising one or more instructions which when executed by one or more hardware processors cause:
receiving an input comprising a pricing information and an associated information comprising at least one of one or more images and one or more videos pertaining to one or more competitor items specific to a category through at least one channel at a specific time for each competitor location for a predefined period;
processing the pricing information pertaining to the one or more competitor items to obtain one or more dimensions of price variation for each competitor item for each competitor location at one or more dynamic time intervals by aggregating one or more obtained competitor prices for the one or more dynamic time intervals;
generating, by a few-shot prompting using one or more multimodal generative artificial intelligence (GenAI) foundation models connected with a selective Retrieval Augmented Generation (RAG) repository, a causative information in a textual format for the one or more dimensions of each influencing factor comprising a nature of competitor item, the one or more dimensions of time and location and for each of the one or more images and one or more videos pertaining to one or more competitor items at the specific time in a trail mode by using one or more queries from a prompt template;
creating by instructions in prompt engineering, one or more binary values for each dimension of each influencing factor from the generated causative information at the specific time in specific to each competitor location for each trial of the trail mode;
deriving a frequency for each dimension of each of the influencing factor from the binary values to obtain multiple dimensions of influencing factors at the one or more dynamic time intervals specific to each competitor location for each trial of the trail mode;
associating the one or more dimensions of price variations to the one or more dimensions of each influencing factor for each competitor item and competitor location at the one or more dynamic time intervals through a canonical correspondence analysis;
identifying, by using a feedback mechanism, an ideal combinations of dimensions of competitor price variations and an ideal combinations of dimensions of influencing factors in which the ideal combinations of dimensions of competitor price variations and the ideal combinations of dimensions of influencing factors result in an optimum association between the one or more dimensions of competitor price variations and the one or more dimensions of influencing factors among the trails of the trail mode with the one or more dynamic time intervals;
arriving a competitive pricing enabler which captures a competitive pricing trend by associating the ideal combinations of dimensions of competitor price variations and the ideal combinations of dimensions of influencing factors in a multivariate multiple regression model;
automatically adjusting the competitive pricing enabler to improve an associated accuracy based on a continuously changing competitor pricing trend by a continuous learning and feedback mechanism;
pre-empting, by using the automatically adjusted competitive pricing enabler, one or more dimensions of competitor price variations based on the continuously changing competitor pricing trend for a given new test scenario with one or more dimensions of influencing factors, time interval, and competitor location by using the competitive pricing enabler and forming one or more pricing strategies of a retailer based on the pre-empted one or more dimensions of competitor price variations; and
enabling an integration of a plurality of applications with the automatically adjusted competitive pricing enabler having the pre-empted one or more dimensions of competitor price variations to optimize one or more operations associated with competitive pricing, wherein the plurality of applications pertains to at least one of a pricing, a promotion, a mark down, and a clearance.

10. The one or more non-transitory machine-readable information storage mediums as claimed in claim 9, wherein the prompt template comprises a set of queries based on one or more inputs from one or more subject matter experts (SMEs) and are updated at one or more intervals for generating relevant textual information specific to the one or more competitor items, and the at least one of the one or more images and the one or more videos through the few-shot prompting via a prompt engineering from the one or more multimodal GenAI foundation models under one or more trails of the trail mode.

11. The one or more non-transitory machine-readable information storage mediums as claimed in claim 9, wherein one or more associated dimensions of an influencing factor include one or more dynamic types of the influencing factor which is generated and provided by the one or more multimodal GenAI foundation models under one or more trials of the trial mode, and wherein the ideal combinations of dimensions of the influencing factor is determined through a feedback mechanism.

12. The one or more non-transitory machine-readable information storage mediums as claimed in claim 9, wherein the selective RAG repository is a container with a selective stored information associated with each trail comprising an input, an output and one or more intermediate outcomes, and wherein the selective RAG repository enables the one or more multimodal GenAI foundation models (i) for an incremental learning based on an associated storage, and (ii) to adjust an associated latest response for a latest query for a context by learning one or more associated historical responses and queries.
